# EUROPÄISCHE PATENTSCHRIFT

(11) **EP 3 804 092 B1**
(45) Veröffentlichungstag und Bekanntmachung des Hinweises auf die Patenterteilung: **09.12.2026**
(21) Anmeldenummer: 19725342.0
(22) Anmeldetag: 16.05.2019
(51) Int. Cl.: B60S 1/02, B63B 19/02, H02K 5/16, H02K 1/2795, H02K 5/173

(54) **ANTRIEBSVORRICHTUNG UND DREHFENSTER MIT DIESER ANTRIEBSVORRICHTUNG**
DRIVE DEVICE AND PIVOTAL WINDOW COMPRISING SAID DRIVE DEVICE
DISPOSITIF D'ENTRAÎNEMENT ET FENÊTRE DE ROTATION POURVUE DE CE DISPOSITIF D'ENTRAÎNEMENT

(30) Priorität: 05.06.2018 DE 102018113373
(43) Veröffentlichungstag der Anmeldung: 14.04.2021
(73) Patentinhaber: HEMA Maschinen- und Apparateschutz GmbH, 63500 Seligenstadt (DE)
(72) Erfinder: NAJORKA, Lars, 63225 Langen (DE)
(74) Vertreter: Herrmann, Daniel
(86) Internationale Anmeldenummer: PCT/EP2019/062712
(87) Internationale Veröffentlichungsnummer: WO 2019/233732

(56) Entgegenhaltungen:
- EP-A1- 1 760 514
- EP-A1- 3 148 056
- EP-A2- 0 723 328
- EP-A2- 1 026 809
- EP-A2- 2 709 248
- CN-U- 201 841 434
- DE-U1- 202017 100 300
- GB-A- 868 632
- US-A- 4 900 958
- US-A- 5 161 055
- US-A- 6 081 057
- US-A1- 2017 250 637

## Beschreibung

Die Erfindung betrifft ein Drehfenster mit einer Antriebsvorrichtung gemäß Anspruch 1.

Drehfenster oder auch rotierende Sichtfenster werden an Scheiben bzw. Sichtfenstern eingesetzt, an denen die Durchsicht durch Niederschlag behindert wird. Dies kann beispielsweise bei Werkzeugmaschinen oder bei Sichtfenstern in der Schifffahrt der Fall sein. Bei beiden Szenarien schlägt sich regelmäßig eine große Menge an Flüssigkeit, sei es Regen oder Wellenschlag oder im Falle von Werkzeugmaschinen Kühlmittel, auf dem Sichtfenster nieder. Dadurch wird die Durchsicht durch das Sichtfenster behindert.

Eine Möglichkeit, die Durchsicht durch ein solches Sichtfenster sicherzustellen, ist der Einbau eines Drehfensters. Drehfenster weisen eine Scheibe auf, die mit einer hohen Drehzahl rotiert. Flüssigkeiten oder Verschmutzungen, die sich auf der Scheibe niedergeschlagen haben, werden durch die Drehbewegung der Scheibe beschleunigt und durch die Zentrifugalkraft radial nach außen bewegt. Dadurch wird die Scheibe rasch niederschlagsfrei. Neu auftretender Niederschlag wird dementsprechend schnell von dem Drehfenster weg transportiert, sodass durch das in Betrieb befindliche Drehfenster eine ungehinderte Durchsicht ermöglicht ist.

Drehfenster weisen daher generell eine runde Bauform auf und werden in normale Sichtfenster oder Maschinenumhausungen eingebaut, um im Falle des erhöhten Niederschlags eine Durchsicht zu ermöglichen. Für den Fall, dass kein Niederschlag vorhanden ist, oder nur geringer Niederschlag auftritt, werden die Sichtfenster normalerweise mittels anderer Methoden (beispielsweise Scheibenwischer) gereinigt, da der Sichtbereich durch das normale Sichtfenster größer ist. Bei einem Einsatz von Werkzeugmaschinen, die Kühlmittel einsetzen, kann so viel Niederschlag durch Kühlmittel, Späne und dergleichen auftreten, dass die Durchsicht durch ein Sichtfenster während des Betriebs behindert ist. In diesem Fall kann es von Vorteil sein, ein Drehfenster in dem Sichtfenster oder in eine Maschinenumhausung vorzusehen.

Insbesondere bei einem besonders starken Niederschlag auf das Drehfenster muss die von der Antriebsvorrichtung des Fensters bereitgestellte Zentrifugalgraft ausreichen, um den Niederschlag zu beseitigen. Als besonders starker Niederschlag kann eine große Menge von Niederschlag in einer kurzen Zeit in Frage kommen. Außerdem kann ein zähflüssiger Niederschlag oder eine Vermischung eines Fluids mit festen Bestandteilen, wie z.B. ein mit Spänen versetztes Kühlmittel von Werkzeugmaschinen, hohe Anforderungen an das Drehfenster stellen.

Drehfenster sind beispielsweise aus DE 34 144 87 A1, US5161055A und der DE 35 32 362 A1 bekannt. Für den Antrieb sind verschiedene Typen von Antriebsvorrichtungen, beispielsweise elektrische Synchronmotoren, Asynchronmotoren, pneumatische Motoren oder hydraulische Motoren vorgesehen, die sich im Zentrum des Drehfensters angeordnet sind. Durch die Antriebsvorrichtungen wird das Sichtfeld verkleinert, da diese eine Fläche im Zentrum des Drehfensters verdecken. Außerdem weisen die Motoren eine gewisse Bauhöhe auf, die bei einer schrägen Sicht auf das Drehfenster die Durchsicht durch das Drehfenster behindern. Zudem benötigen die Antriebsvorrichtungen eine Zuleitung, die meist in radialer Richtung über das Drehfenster läuft, um die für die Drehung der Scheibe benötigte Energie bereit zu stellen. Durch die Bauhöhe der Antriebsvorrichtungen ist es bisher nicht oder nur schwer möglich, Drehfenster in Sichtscheiben einzusetzen, die im Wesentlichen parallel zueinander verschiebbar sind.

EP 1 026 809 A2 zeigt eine Antriebseinheit für Laufwerke von EDV-Einrichtungen und EP 1 760 514 A1 betrifft eine Antriebseinheit für einen Labelscanner. CN 201 841 434 U betrifft ein Drehfenster.

Dennoch hat sich der Betrieb von Drehfenstern mit einer zentralen Antriebsvorrichtung durchgesetzt, da der Aufbau konstruktiv günstig ist und die Drehfenster mit der zentralen Motoranordnung langlebig und störungsunanfällig sind.

Aufgabe der Erfindung ist es, die Antriebsvorrichtung hinsichtlich der Bauhöhe und der Energieeffizienz zu verbessern und ein Drehfenster mit einer solchen Antriebsvorrichtung bereit zu stellen.

Hauptmerkmale der Erfindung sind im kennzeichnenden Teil von Anspruch 1 angegeben.

Ausgestaltungen sind Gegenstand der Ansprüche 2 bis 12.

Die Erfindung betrifft ein Drehfenster mit einer Antriebsvorrichtung, wobei erfindungsgemäß vorgesehen ist, dass an einer Rotoreinheit des Drehfensters eine Scheibe angeordnet ist. Ein mit der erfindungsgemäßen Antriebsvorrichtung ausgestattetes Drehfenster weist eine niedrige Bauhöhe auf. Die Scheibe kann vorzugsweise kreisrund ausgebildet sein und ist auf der Seite des Drehfensters angeordnet, die dem Niederschlag ausgesetzt ist. In einer weiteren bevorzugten Ausführungsform ist daher vorgesehen, dass die Scheibe auf dieser Seite mit einer Beschichtung und/oder Auflage versehen ist, die stoßfest und/oder kratzfest ist. Die Scheibe kann mit einer transparenten Beschichtung aus Keramik versehen sein. Dadurch ergibt sich der Vorteil, dass die Scheibe aus einem weniger widerstandsfähigen Material herstellbar ist, sodass die Gesamtmasse der Scheibe verringert werden kann. Damit verbunden ergibt sich für das Drehfenster bei gleichbleibender Motorleistung eine erhöhte Reinigungswirkung. Ebenso kann durch die Masseneinsparung bei der Scheibe der Antriebsvorrichtung entsprechend kleiner dimensioniert werden, was in Hinblick auf die Bauhöhe und in Hinblick auf die Abdeckung des Sichtbereichs durch die Antriebsvorrichtung günstig ist.

Für die Antriebsvorrichtung mit einer ringförmigen Statoreinheit, einer ringförmigen Rotoreinheit und einer Grundplatte, wobei die Statoreinheit mindestens drei Spulen mit Spulenkernen und Spulenkörpern aufweist und die Rotoreinheit eine Lagereinheit aufweist, wobei die Spulen einen Aufnahmeraum in der Statoreinheit bilden, ist erfindungsgemäß vorgesehen, dass die Spulenkerne und die Lagereinheit auf der Grundplatte aufstehen.

Dementsprechend kann die Antriebsvorrichtung insbesondere als elektrische Antriebsvorrichtung, also als Elektromotor ausgebildet sein. Insbesondere ist vorgesehen, dass die Lagereinheit und die Spulenkerne direkt auf der Grundplatte aufstehen. Dadurch ergibt sich der Vorteil, dass die Bauhöhe der Antriebsvorrichtung besonders niedrig ist. Durch das gemeinsame Anordnen der Lagereinheit und der Spulenkerne der Statoreinheit auf der Grundplatte ergibt sich außerdem der Vorteil, dass die Spulen bzw. Spulenkerne der Statoreinheit und die Lagereinheit bzw. die Rotoreinheit exakt zueinander ausgerichtet sind, denn die Grundplatte sowie die Aufstandsflächen der Lagereinheit und der Rotoreinheit lassen sich mit hoher Präzision fertigen.

Daher sind die Rotoreinheit und die Statoreinheit mit einem besonders geringen Abstand zueinander anordenbar, wodurch eine noch geringere Bauhöhe und eine gleichzeitige Steigerung der Effizienz der Antriebsvorrichtung erreicht wird. Somit wird ein hohes Drehmoment der Antriebsvorrichtung erreicht, wodurch bei einem Einsatz der Antriebsvorrichtung in einem Drehfenster ein hohes Drehmoment für schweren, direkten Kühlmittelbeschuss bereitgestellt ist.

In einer axialen Richtung gesehen weisen die Spulenkerne in einer bevorzugten Weiterbildung eine radial nach innen konisch zulaufende Form auf. Insbesondere sind die Spulenkerne kreisringsegmentförmig. Dadurch ergibt sich eine besonders platzsparende Anordnung der Spulenkerne in der ringförmigen Statoreinheit bzw. in der Antriebsvorrichtung.

Nach einer weiteren Ausführungsform ist vorgesehen, dass die Rotoreinheit in einer axialen Richtung konzentrisch zu den Spulen angeordnet ist und mit der Lagereinheit zumindest teilweise in den Aufnahmeraum hineinragt. Durch diese Verschachtelung der Rotoreinheit und der Statoreinheit lässt sich die Bauhöhe der Antriebseinheit in vorteilhafter Weise weiter verringern.

Erfindungsgemäß ist ferner ist vorgesehen, dass die Spulenkörper zumindest teilweise auf einer Leiterplatte angeordnet sind. Hierbei ist vorgesehen, dass die Leiterplatte auf der Grundplatte aufliegt und eine Ausnehmung aufweist. Durch das Anordnen der Spulenkörper auf der Leiterplatte lassen sich Spulenwindungen, die auf die Spulenkörper aufwickelbar sind, besonders einfach mit einer Steuer- bzw. Regelelektronik der Antriebseinheit verbinden. Durch das Aufliegen und insbesondere durch das in einer bevorzugten Ausführungsform direkte Aufliegen der Leiterplatte auf der Grundplatte wird der für die Antriebseinheit zur Verfügung stehende Bauraum in vorteilhafter Weise optimal ausgenutzt.

Nach einer weiteren bevorzugten Ausführungsform ist dabei ferner vorgesehen, dass die Spulenkerne die Leiterplatte im Bereich der Ausnehmung durchragen. So ist sichergestellt, dass sowohl die Leiterplatte, als auch die Spulenkerne direkt auf der Grundplatte aufstehen. In einer bevorzugten Ausführungsform entspricht ein durch die Spulenkerne definierter Außenumfang dem Innenumfang der Ausnehmung der Leiterplatte, sodass die Spulenkerne formschlüssig mit der Leiterplatte in Eingriff stehen. Dadurch wird der benötigte Bauraum für die Antriebseinheit in vorteilhafter Weise minimiert. Nach einer Weiterbildung der Erfindung ist vorgesehen, dass die Spulenkörper die Ausnehmung zumindest teilweise überragen. Insbesondere ist hierbei vorgesehen, dass die Spulenkörper die Ausnehmung in radialer Richtung überragen. Auf diese Weise kann der Bauraum in der Antriebseinheit, der radial nach Innen in Richtung zur Lagereinheit zur Verfügung steht, für die Spulen der Statoreinheit effizient genutzt werden.

Die Spulenkerne hängen im Bereich der Ausnehmung über Stege zusammen und bilden mindestens ein Spulenkernelement. In einer noch weiteren Ausgestaltung kann vorgesehen sein, dass die Spulenkörper zumindest teilweise über dem Spulenkernelement angeordnet sind. Außerdem kann vorgesehen sein, dass die Stege auf dem Grundkörper aufliegen und die Spulenkerne auf der dem Grundkörper zugewandten Seite verbinden. Weiterhin können die Stege direkt auf dem Grundkörper aufliegen. Die Stege können den Außenumfang des Spulenkernelements bilden. In einer bevorzugten Ausführungsform bilden die Stege gemeinsam mit den Spulenkernen den Außenumfang des Spulenkernelements. In einer Weiterbildung der Erfindung ist vorgesehen, dass die Stege dasselbe Material wie die Spulenkerne aufweisen. In einer weiteren Ausgestaltung der Erfindung ist vorgesehen, dass das Spulenkernelement einteilig bzw. einstückig ausgebildet ist. Durch das Vorsehen eines entsprechenden Spulenkernelements erhöht sich die mechanische Stabilität des Stators. Zudem ergibt sich wird der Wirkungsgrad der Antriebsvorrichtung durch die verbundenen Spulenkerne verbessert, weil Wirkungsgradverluste, die durch die Ummagnetisierung bzw. durch Wirbelströme auftreten, durch die Stege verringert werden.

Eine Ausgestaltung der Erfindung kann vorsehen, dass die Leiterplatte einen Steuer- und/oder Regelschaltkreis aufweist. Daher ist in einer weiteren konstruktiv günstigen Ausgestaltung der Erfindung vorgesehen, dass die Spulenkörper und der Steuer- und/oder Regelschaltkreis im Wesentlichen auf einer Ebene angeordnet sind. Bevorzugt ist diese Ebene durch eine Seite der Grundplatte gebildet. Auf diese Weise ist der Steuer- und/oder Regelschaltkreis besonders nah an dem Spulenkörper und somit auch besonders nah an den Spulen anordenbar. Dies wirkt sich hinsichtlich möglicher Leitungsverluste zwischen dem Steuer- und/oder Regelschaltkreis und den Spulen günstig aus. Außerdem ist die Ausnutzung des Bauraums in Hinblick auf eine kompakte Antriebsvorrichtung optimal.

In einer alternativen Weiterbildung ist vorgesehen, dass der Steuer- und/oder Regelschaltkreis auf einer weiteren Leiterplatte angeordnet ist. Gemäß dieser alternativen Ausgestaltung lässt sich die Leiterplatte flexibel in der Antriebsvorrichtung anordnen, sodass sich in Hinblick auf die Flexibilität bei der räumlichen Ausgestaltung der Antriebsvorrichtung Vorteile ergeben.

In einer vorteilhaften Ausgestaltung der Erfindung kann vorgesehen sein, dass die Lagereinheit ein Tragelement aufweist. Konstruktiv kann optional vorgesehen sein, dass das Tragelement einen Anlagebereich aufweist, der sich auf der der Grundplatte gegenüberliegenden Seite der Spulen in radialer Richtung zumindest teilweise über die Spulen hinweg erstreckt. Eine weitere vorteilhafte Ausgestaltung der Erfindung sieht vor, dass an dem Tragelement mindestens drei Permanentmagnete angeordnet sind. In einer bevorzugten Ausgestaltung haben die sind die Permanentmagnete kreisringsegmentförmig. Auf diese Weise sind die Permanentmagnete besonders platzsparend und dicht an dem Tragelement der ringförmigen Rotoreinheit anordenbar.

Dadurch, dass die Permanentmagnete an dem Anlagebereich auf einer den Spulen zugewandten Seite angeordnet sind, ergibt sich in vorteilhafter Weise der Aufbau eines Scheibenläufermotors, der eine besonders niedrige Bauhöhe aufweist. Daher ist in optionalen Ausgestaltung vorgesehen, dass die mindestens drei Permanentmagnete in dem Tragelement einliegen. Die Erfindung kann dadurch weitergebildet sein, dass zwischen dem Anlagebereich und den Spulen in axialer Richtung ein Spalt ausgebildet ist. In einer besonders vorteilhaften Weiterbildung ist vorgesehen, dass der Spalt zwischen dem sich radial erstreckenden Anlagebereich möglichst klein ausgebildet ist, um einen hohen Wirkungsgrad der Antriebsvorrichtung und gleichzeitig eine Reduzierung der Bauhöhe zu erreichen. Daher ist in einer Weiterbildung vorgesehen, dass der Spalt zwischen den Permanentmagneten und der den Permanentmagneten zugewandten Seiten der Spulen weniger als 1 mm, bevorzugt weniger als 0,1 mm beträgt. In diesen Ausgestaltungen verläuft der Spalt in radialer Richtung parallel zur Grundplatte.

Entsprechend der Erfindung ist vorgesehen, dass die Lagereinheit mit einem drehfesten Lagerbolzen auf der Grundplatte aufsteht. Dadurch wird die Stabilität der Antriebsvorrichtung erhöht. Der Lagerbolzen kann mittels eines Befestigungsmittels, insbesondere mittels einer Schraube von einer den Spulen abgewandten Seite der Grundplatte her mit der Grundplatte verschraubt sein. In einer weiteren Ausgestaltung der Erfindung ist vorgesehen, dass zwischen dem Lagerbolzen und dem Tragelement mindestens ein Kugellager angeordnet ist. Auf diese Weise ist das Tragelement von der Grundplatte in vorteilhafter Weise besonders reibungsarm drehentkoppelt.

Dabei ist nach einer weiteren Ausführungsform vorgesehen, dass die Spulen in axialer Richtung ausgerichtet sind. Insbesondere ist hierdurch sichergestellt, dass die Spulen mit deren Oberseiten, die senkrecht zur axialen Richtung verlaufen, parallel zu dem Tragelement verlaufen. Dadurch ergibt sich der Vorteil, dass der Spalt besonders klein ausgestaltbar ist.

Nach einer bevorzugten Ausführungsform ist vorgesehen, dass die Leiterplatte und/oder die Spulen und/oder die Grundplatte mit einer Vergussmasse vergossen sind. Nach einer weiteren bevorzugten Ausführungsform ist dabei ferner vorgesehen, dass die Vergussmasse eine hohe Wärmeleitfähigkeit aufweist. Durch das Vergießen der Leiterplatte, der Spulen und der Grundplatte wird ein Explosionsschutz für die Antriebsvorrichtung erreicht, da die Bauteile auch bei schweren Erschütterungen nicht gegeneinander bewegbar sind. Zudem ergibt sich durch das Einsetzen einer wärmeleitfähigen Vergussmasse ein guter thermischer Kontakt zwischen der Leiterplatte bzw. den Spulen und der Grundplatte. Auf diese Weise ist die Antriebsvorrichtung gut kühlbar. Daraus ergibt sich der weitere Vorteil, dass die Antriebsvorrichtung zur Erreichung besonders hoher Drehmomente mit einer hohen elektrischen Leistung betreibbar ist, ohne, dass die einzelnen Komponenten überhitzen. Außerdem sind durch die Kapselung der gesamten elektronischen Komponenten der Antriebsvorrichtung diese servicefreundlich austauschbar. Nach einer weiteren Ausführungsform kann vorgesehen sein, dass die Grundplatte ein wärmeleitfähiges Material aufweist.

Auf der dem Niederschlag abgewandten Seite kann das Drehfenster eine weitere Scheibe aufweisen, die starr ist. Diese weitere Scheibe ist auf der dem Betrachter zugewandten Seite angebracht und kann aus einem Verbundsicherheitsglas oder einem Einscheibensicherheitsglas oder einer transparenten Keramik oder einem Glas, das optional mit einer solchen transparenten Keramik beschichtet ist, bestehen. Durch die zweite Scheibe besteht in vorteilhafter Weise ein Schutz eines Betrachters des Drehfensters vor der rotierbaren Scheibe. Zudem wird die Sicherheit des Drehfensters durch das Vorsehen einer zweiten Scheibe erhöht.

Durch einen entsprechenden Aufbau des Drehfensters wird in vorteilhafter Weise eine niedrige Bauhöhe des Drehfensters erreicht. Die Bauhöhe des Drehfensters kann weniger als 50 mm, in einer weiteren Ausführungsform weniger als 40 mm und in einer anderen Ausführungsform weniger als 32 mm betragen. Durch das erfindungsgemäße Ausgestalten des Drehfensters ist eine Sichtfläche von 410 mm² oder mehr erreichbar, wobei die Antriebsleistung der Antriebsvorrichtung ausreicht, die Scheibe bzw. das Drehfenster von Niederschlag zu befreien.

In einer Weiterbildung ist vorgesehen, dass die Scheibe an der Rotoreinheit zwischen einer Verbindungsplatte und einer Abdeckkappe gehalten ist, wobei die Verbindungsplatte und die Abdeckkappe mit der Rotoreinheit verbunden sind. Durch das Vorsehen der Verbindungsplatte ergeben sich konstruktive Vorteile, da die Scheibe mittels der Verbindungsplatte freier an der Rotoreinheit anordenbar ist. In einer Weiterbildung ist vorgesehen, dass zwischen der Abdeckkappe und der Scheibe eine ringförmige Dichtung angeordnet ist. Durch die Dichtung wird sichergestellt, dass kein Niederschlag in einen Innenbereich des Drehfensters eintritt bzw. das Drehfenster passieren kann.

Eine weitere Ausgestaltung sieht vor, dass die Scheibe an ihrem radial äußeren Umfang einen umlaufenden Kragen aufweist. Durch den Kragen ist sichergestellt, dass der Niederschlag auf dem Drehfenster auch entlang dessen Umfang nicht in einen Innenbereich des Drehfensters eintreten kann oder gar das Drehfenster passieren kann. In einer optionalen Weiterbildung ist daher vorgesehen, dass der Kragen eine radial umlaufende und in eine axiale Richtung ragende Führungsnut aufweist, die mit einem Führungssteg eines ringförmigen Grundkörpers des Drehfensters in Eingriff steht. Die Führungsnut und der Führungssteg bilden somit in vorteilhafter Weise eine Labyrinthdichtung aus, durch die die Dichtigkeit des Drehfensters verbessert wird. In einer vorteilhaften Ausgestaltung der Erfindung kann daher vorgesehen sein, dass die Führungsnut und der Führungssteg kontaktfrei sind. Der ringförmige Grundkörper des Drehfensters ist beispielsweise in einer der Sichtscheibe oder einer Maschinenabdeckung montiert. Der ringförmige Grundkörper ist also nicht durch die Antriebsvorrichtung rotierbar. Der ringförmige Grundkörper ist bevorzugt aus Aluminium hergestellt, das hart eloxiert ist. Somit eignet sich der ringförmige Grundkörper auch zum Einsatz in Umgebungen, in denen Späne, insbesondere Metallspäne auf das Drehfenster treffen.

Konstruktiv kann optional vorgesehen sein, dass die Grundplatte der Antriebsvorrichtung an einem Innendurchmesser des ringförmigen Grundkörpers angeordnet ist und radial nach Innen in den ringförmigen Grundkörper hineinragt. Somit ergibt sich der Vorteil, dass die Antriebsvorrichtung nicht aus dem Bereich des Drehfensters heraussteht. In einer Ausgestaltung ist vorgesehen, dass für die Grundplatte der Antriebsvorrichtung ein an den ringförmigen Grundkörper heranragendes Abdeckgehäuse vorgesehen ist, wobei die Rotoreinheit der Antriebsvorrichtung das Abdeckgehäuse zumindest teilweise durchragt. In einer weiteren bevorzugten Ausführungsform ist vorgesehen, dass das Abdeckgehäuse aus Aluminium hergestellt ist, das hart eloxiert ist. Die Erfindung kann dadurch weitergebildet sein, dass zwischen der Grundplatte und dem Abdeckgehäuse eine Dichtung angeordnet ist. Dadurch sind die zwischen dem Abdeckgehäuse und der Grundplatte liegenden Elemente der Antriebsvorrichtung vor eventuell in diesen Bereich eintretendem Niederschlag geschützt.

Zur Vereinfachung des Anschlusses des Drehfensters kann es außerdem günstig sein, wenn der ringförmige Grundkörper eine Durchführung für eine Zuleitung der Antriebsvorrichtung aufweist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Explosionsdarstellung der Antriebsvorrichtung;
- Fig. 2: eine schematische, Schnittdarstellung der Antriebsvorrichtung in einem Drehfenster;
- Fig. 4: eine schematische Schnittdarstellung des Drehfensters und
- Fig. 5: eine schematische Explosionsdarstellung des Drehfensters.

Im Folgenden werden einander ähnliche oder identische Elemente mit denselben Bezugszeichen gekennzeichnet.

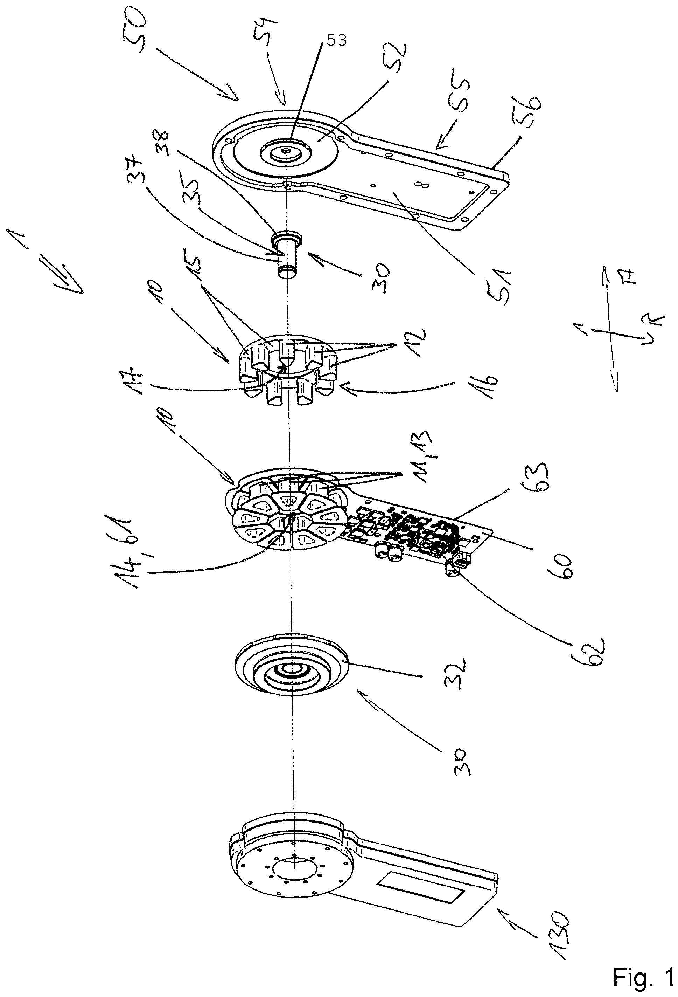

Fig. 1 zeigt die Antriebsvorrichtung 1 in einer Explosionsdarstellung. Die Antriebsvorrichtung 1 setzt sich aus einer Statoreinheit 10, einer Rotoreinheit 30, einer Grundplatte 50 und mindestens einer Leiterplatte 60, 60' zusammen. Die Grundplatte 50 hat im Wesentlichen eine Schlüssellochform mit einem runden Abschnitt 54 und einem rechteckigen Abschnitt 55. Die Grundplatte 50 weist ein wärmeleitfähiges Material auf.

Die Statoreinheit 10, sowie die Rotoreinheit 30 sind im Wesentlichen ringförmig ausgebildet. Die Statoreinheit 10 weist mindestens drei Spulen 11 auf. Die Spulen 11 werden aus Spulenkernen 12 und Spulenkörpern 13 gebildet. Die Spulenkerne 12 werden in die Spulenkörper 13 entlang einer axialen Richtung A eingeschoben. Die Spulenkörper 13 weisen hierfür Ausnehmungen 17 auf, die sich in axialer Richtung A erstrecken. Die Spulenkerne 12 weisen eine in einer radialen Richtung R nach innen zulaufende Form auf.

Die Spulen 11 sind im Wesentlichen ringförmig angeordnet und bilden einen Aufnahmeraum 14 in der Statoreinheit 10 aus. Die Spulenkerne 12 stehen auf der Grundplatte 50 auf, bzw. liegen plan an der Grundplatte 50 an. Der Aufnahmeraum 14 liegt in radialer Richtung R gesehen konzentrisch zu dem runden Abschnitt 54 der Grundplatte 50.

Die Spulenkerne 12 hängen über Stege 15 zusammen und bilden mindestens ein Spulenkernelement 16. In dieser Ausführungsform ist das Spulenkernelement 16 ringförmig als geschlossener Ring ausgebildet und weist im Bereich des Aufnahmeraums 14 eine ringförmige Ausnehmung auf.

Um den Umfang der Spulenkörper 13 werden Spulendrähte gewickelt. Die Spulenkörper 13 sind zumindest teilweise auf der Leiterplatte 60, 60' angeordnet.

Die Leiterplatte 60, 60' ist auf dem Grundkörper 50 angeordnet bzw. liegt plan auf diesem Grundkörper 50 auf. Die Leiterplatte 60, 60' weist in dem Bereich des Aufnahmeraums 14, der durch die Spulen 11 der Statoreinheit 10 gebildet wird, eine Ausnehmung 61 auf. Die Spulenkerne 12 durchragen die Leiterplatte 60, 60' im Bereich der Ausnehmung 61.

Die Leiterplatte 60, 60' weist einen Steuer- und/oder Regelschaltkreis 62 auf. Dieser Steuer- und/oder Regelschaltkreis 62 wird durch ein oder mehrere elektronische Bauelemente gebildet, die durch in die Leiterplatte 60, 60' eingebracht Leiterbahnen elektrisch miteinander verschaltet sind. Der Steuer- und/oder Regelschaltkreis 62 dient der Steuerung und/oder Regelung der Antriebsvorrichtung 1. Hierbei ist der Steuer- und/oder Regelschaltkreis 62 im Wesentlichen auf einer Ebene mit den Spulenkörpern 13 angeordnet. Der Steuer- und/oder Regelschaltkreis 62 ist im Wesentlichen auf der der Grundplatte 50 gegenüberliegenden Seite der Leiterplatte 60, 60' angeordnet.

Die Spulenkörper 13 überragen die Ausnehmung 61 der Leiterplatte 60, 60' zumindest teilweise. Die Spulenkörper 13 sind von der Grundplatte 50 aus gesehen auf der der Grundplatte 50 gegenüberliegenden Seite der Leiterplatte 60, 60' angeordnet. Die Spulenkörper 13 liegen Plan auf der Leiterplatte 60, 60' auf.

Die Leiterplatte 60, 60' liegt in der Grundplatte 50 ein. Die Grundplatte 50 weist hierfür eine Ausnehmung 51 auf, deren Umfang im Wesentlichen parallel zu dem Außenumfang 56 der Grundplatte 50 verläuft. Die Leiterplatte 60, 60' hat einen der Ausnehmung 51 entsprechenden Umriss 63. In dem Bereich, in dem das Spulenkernelement 16 bzw. die Spulenkerne 12 einliegen, weist die Ausnehmung 51 eine ringförmige Vertiefung 52 auf, die im Wesentlichen dem Außenumfang des Spulenkernelements 16 entspricht.

In einem zusammengebauten Zustand der Antriebsvorrichtung 1 ist das Spulenkernelement 16 mit den Spulenkernen 12 in die Spulenkörper 13 eingeschoben, sodass durch die Spulenkerne 12 des Spulenkernelement 16 und die Spulenkörper 13 die Spulen 11 gebildet werden. Daher ergibt sich eine Zuordnung, in der die Spulenkörper 13 zumindest teilweise über dem Spulenkernelement 16 angeordnet sind.

Die Rotoreinheit 30 weist eine Lagereinheit 31 auf. Mittels dieser Lagereinheit 31 ist die Rotoreinheit 30 drehbar gegenüber der Grundplatte 50 gelagert. Ein Teil der Lagereinheit 31 ist drehfest mit der Grundplatte 50 verbunden. Ein anderer Teil der Lagereinheit 31 ist gegenüber der Grundplatte 50 rotierbar. Die Lagereinheit 31 steht auf der Grundplatte 50 auf bzw. liegt plan an der Grundplatte 50 an.

Die Rotoreinheit 30 ist in axialer Richtung A in die Statoreinheit 10 eingesetzt. Die Rotoreinheit 30 ist in einer axialen Richtung A konzentrisch zu den Spulen 11 angeordnet. Hierbei ragt die Rotoreinheit 30 mit ihrer Lagereinheit 31 in den Aufnahmeraum 14 der Statoreinheit 10.

Die Rotoreinheit 30 weist eine Lagereinheit 31 mit einem Tragelement 32 und einem Lagerbolzen 35 auf.

Der Lagerbolzen 35 der Lagereinheit 31 hat einen Schaftteil 37 und einen Anlageflansch 38. Der Anlageflansch 38 ist in Kontakt mit der Grundplatte 50 und steht zentral in dem runden Abschnitt 54 der Grundplatte 50 auf. Die ringförmige Vertiefung 52 weist in diesem zentralen Bereich des runden Abschnitts 54 der Grundplatte 50 eine ringförmige Ausformung 53 auf, die den Anlageflansch 38 um dessen Umfang herum einfasst. Der Lagerbolzen 35 steht drehfest auf der Grundplatte 50 auf und ist mittels eines Befestigungsmittels, wie zum Beispiel einer Schraube, mit der Grundplatte 50 verbunden.

Von der Grundplatte 50 aus gesehen liegt der Schaftteil 37 des Lagerbolzens 35 oberhalb der ringförmigen Ausformung 53. Die Oberseite der ringförmigen Ausformung 53 ist im Wesentlichen in einer Ebene mit der Oberseite der Leiterplatte 60, 60', sodass die Spulenkörper 13 zum einen auf der Leiterplatte 60, 60' aufliegen, als auch auf der Oberseite der ringförmigen Ausformung 53.

Das Tragelement 32 der Lagereinheit 31 hat einen Anlagebereich 33, der sich in einer radialen Richtung R erstreckt. Der Anlagebereich 33 befindet sich an der der Grundplatte 50 gegenüberliegenden Seite der Spulen 11 und erstreckt sich über die Spulen 11 hinweg. Der Anlagebereich 33 ist von den Spulen 11 beabstandet und steht mit den Spulen 11 nicht in Kontakt. An dem Tragelement 32 der Lagereinheit 31 und insbesondere an dem Anlagebereich 33, der sich radial zu den Spulen 11 erstreckt, sind Permanentmagnete 34 angeordnet. Diese Permanentmagnete 34 liegen zumindest teilweise in dem Tragelement 32 ein oder an dem Tragelement 32 an. Für den Fall des Einliegens der Permanentmagnete 34 hat das Tragelement 32 hierfür entsprechende Ausnehmungen. Die Permanentmagnete 34 haben eine radial nach innen zulaufende, konische Form.

Zwischen dem Anlagebereich 33, bzw. den Permanentmagnete 34 und den Spulen 11 ist in axialer Richtung A ein Spalt S ausgebildet.

Zwischen dem Lagerbolzen 35 und dem Tragelement 32 ist mindestens ein Kugellager 36 angeordnet. Das Tragelement 35 weist einen in axialer Richtung A verlaufenden Flanschabschnitt 39 auf. In radialer Richtung R gesehen, sind die Kugellager 36 zwischen dem Schaftteil 37 des Lagerbolzen 35 und dem Flanschabschnitt 39 des Tragelements 32 angeordnet. Auf diese Weise ist das Tragelement 32 von dem Lagerbolzen 35 entkoppelt.

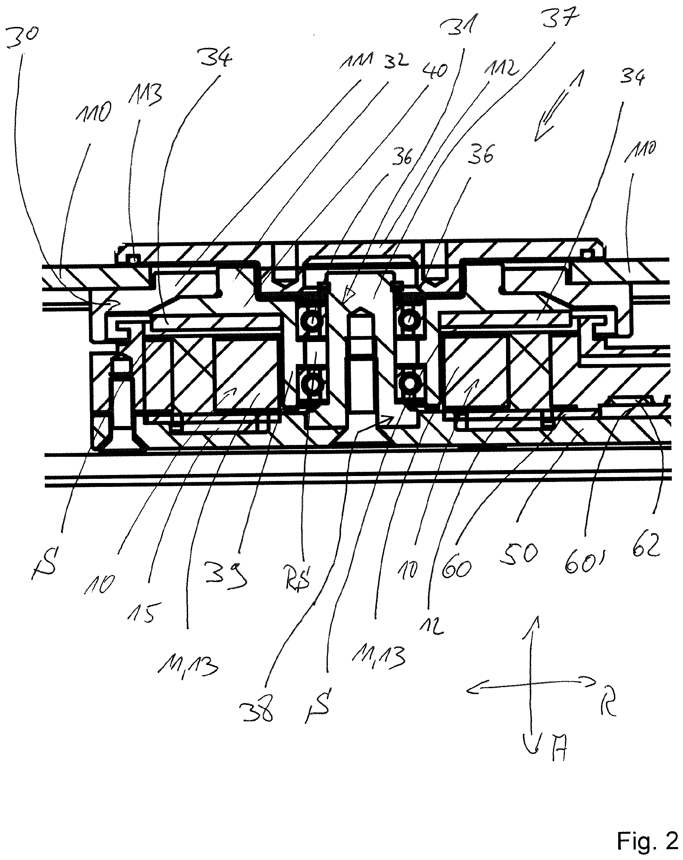

**Fig. 2** ist eine Schnittdarstellung durch eine weitere Ausführungsform der Antriebsvorrichtung 1, wobei der Steuer- und/oder Regelschaltkreis 62 auf einer weiteren Leiterplatte 60' angeordnet ist und die Spulenkörper 13 auf der von der weiteren Leiterplatte 60' separaten Leiterplatte 60 angeordnet sind. In der Ausführungsform nach Fig. 1 ist für den Steuer- und/oder Regelschaltkreis 62 und für die Spulen 11 bzw. Spulenkörper 13 eine einteilige Leiterplatte 60 vorgesehen.

Die weitere Leiterplatte 60' liegt in dem Teil der Ausnehmung 51 der Grundplatte 50 ein, der in dem rechteckigen Abschnitt 55 der Grundplatte 50 liegt. Die Leiterplatte 60 liegt in dem Teil der Ausnehmung 51 der Grundplatte 50 ein, der in dem runden Abschnitt 54 der Grundplatte 50 liegt.

Ansonsten entspricht die in der Fig. 2 dargestellte Ausführungsform der Antriebsvorrichtung 1 der in der Fig. 1 dargestellten Ausführungsform.

In der Ausnehmung 51 der Grundplatte 50 liegt das Spulenkernelement 16 ein. Die Spulenkerne 12 erstrecken sich dabei in axialer Richtung A von der Grundplatte 50 weg. Der Lagerbolzen 35 liegt mit seinem Anlageflansch 38 in der ringförmigen Vertiefung 52 in dem zentralen Bereich des runden Abschnitts 54 der Grundplatte 50 ein. In Fig. 2 ist sehr gut erkennbar, dass der der Grundplatte 50 gegenüberliegende Teil des Flanschabschnitts 38 des Lagerbolzen 35, die der Grundplatte 50 gegenüberliegenden Seiten der Stege 15, und die der Grundplatte 50 gegenüberliegende Seite der Leiterplatte 60 gemeinsam mit der Oberseite der ringförmigen Ausformung 53 auf einer Ebene liegen. Die Spulenkörper 13 stehen auf der Oberseite der Leiterplatte 60, der Oberseite der Stege 15 und der Oberseite der ringförmigen Ausformung 53 auf.

Weiterhin ist in Fig. 2 sehr gut erkennbar, dass in radialer Richtung R von innen ausgesehen der Schaftteil 37 des Lagerbolzens 35 von den Kugellagern 36 eingefasst wird. Die Kugellager 36 werden wiederum von dem Flanschabschnitt 39 des Tragelements eingefasst. Der Lagerbolzen 35 ist durch ein Befestigungsmittel, hier eine Schraube, mit der Grundplatte 50 verschraubt und somit drehfest festgelegt.

Durch die Kugellager 36 ist das Tragelement 32 von der Grundplatte 50 entkoppelt, wodurch eine Drehbarkeit Lagereinheit 31 bzw. der Rotoreinheit 30 gegeben ist.

Außerdem ist in Fig. 2 gut erkennbar, dass die Permanentmagnete 34 in einen sich in radialer Richtung R erstreckenden Teil des Tragelements 32 angeordnet sind. Die Permanentmagnete 34 sind im Wesentlichen parallel zu der Grundplatte 50, der Leiterplatte 60, den Stegen 15, und der Oberseite der Spulenkörper 13 bzw. der Spulen 11 angeordnet.

Zwischen der Oberseite der Spulen 11, also der Seite der Spulen 11, die der Grundplatte 50 abgewandt ist, und dem Permanentmagneten 34 bzw. dem Tragelement 32 ist ein Spalt S angeordnet.

Gleichermaßen ist zwischen den Spulen 11 und dem Flanschabschnitt 39 des Tragelements 32 in radialer Richtung R ein Ringspalt RS angeordnet. Dadurch ist die starre, mit der Grundplatte 50 verbundene Statoreinheit 10 von der Rotoreinheit 30, die in Umfangsrichtung rotierbar ist, vollkommen drehentkoppelt.

In Fig. 2 ist weiterhin der Zusammenbau der Antriebsvorrichtung im Bereich der Rotoreinheit 30 und der Statoreinheit 10 zu erkennen.

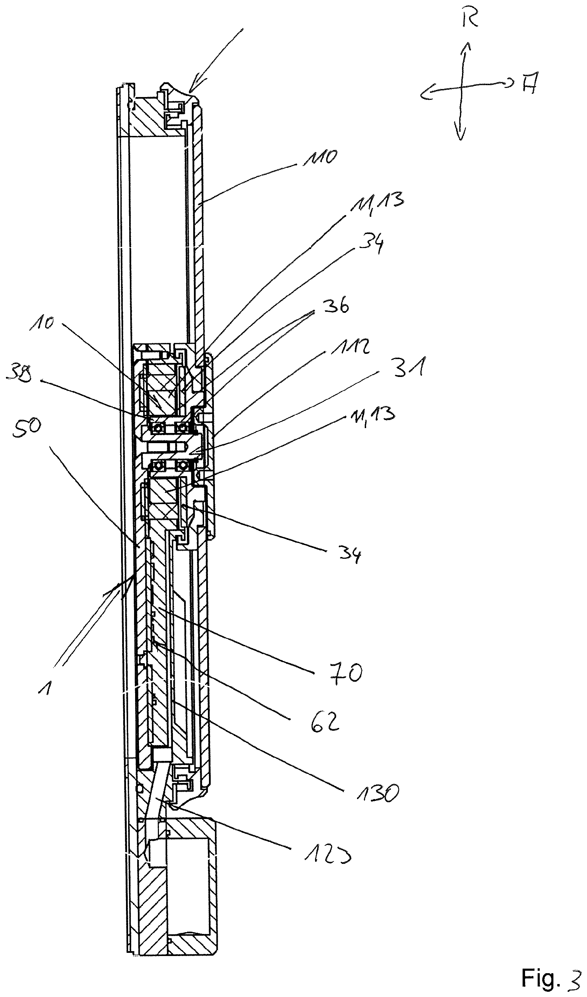

Durch die Stege 15 sind die Spulenkerne 12 zu dem Spulenkernelement 16 verbunden. Dieses Spulenkernelement 16 liegt in dem Grundkörper 50 ein. Die Oberseite der Stege 15 und die Oberseite der Leiterplatte 60 liegen im Wesentlichen auf einer Ebene mit der Oberseite der in Fig. 3 nicht erkennbaren ringförmigen Ausformung 53. Auf dieser Ebene zwischen Leiterplatte 60, Stegen 15 und der ringförmigen Ausformung 53 stehen die Spulenkörper 13 auf.

Weiterhin ist in Fig. 2 das Tragelement 32 mit den darin zumindest teilweise einliegenden Permanentmagneten 34 dargestellt. Die Permanentmagnete 34 liegen im Wesentlichen parallel zu der Ebene der Leiterplatte 60 bzw. der Stege 15.

Das Tragelement 32 bzw. die Rotoreinrichtung 30 ist in deren Umfangsrichtung rotierbar und mittels des drehfest mit der Grundplatte 50 verbundenen Lagerbolzens 35 und der Kugellager 36 von der Grundplatte 50 drehentkoppelt.

In allen Ausführungsformen können die Leiterplatte 60, 60', die Spulen 11 und die Grundplatte 50 mit einer Vergussmasse 70 (in den Zeichnungen nicht dargestellt) vergossen sein. Die Vergussmasse 70 weist eine hohe Wärmeleitfähigkeit auf.

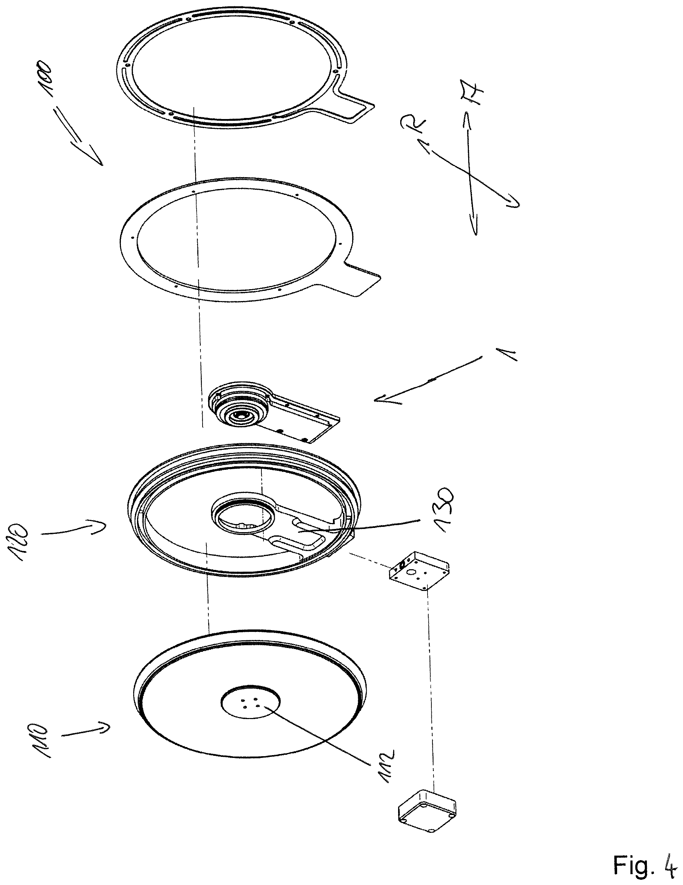

In **Fig. 3** **und** **4** ist eine Ausführungsform des Drehfensters 100 dargestellt.

Fig. 3 zeigt eine Schnittdarstellung des Drehfensters 100 mit der Antriebseinheit 1 nach einer der vorstehend beschriebenen Ausführungsformen. Fig. 5 zeigt eine Explosionsdarstellung des Drehfensters 100 nach einer der vorstehend beschriebenen Ausführungsformen. Hinsichtlich des nachstehend beschriebenen Drehfensters 100 wird auf die Figuren 4 und 5 gemeinsam Bezug genommen. An der Rotoreinheit 30 der Antriebseinheit 1 ist eine Scheibe 110 angeordnet. Die Scheibe 110 ist im Wesentlichen kreisrund ausgebildet.

Die Scheibe 110 ist an der Rotoreinheit 30 zwischen einer Verbindungsplatte 111 und einer Abdeckkappe 112 gehalten, wobei die Verbindungsplatte 111 und die Abdeckkappe 112 mit der Rotoreinheit 30, insbesondere mit dem Tragelement 32 der Rotoreinheit verbunden sind. Zwischen der Abdeckkappe 112 und der Scheibe 110 ist eine ringförmige Dichtung 113 angeordnet.

Die Scheibe 110 ist aus einem transparenten Material gefertigt, beispielsweise einem transparenten Kunststoff oder Glas, wobei als Glas insbesondere Verbundsicherheitsglas oder Einscheibensicherheitsglas in Frage kommt. Die Scheibe 110 kann darüber hinaus zweischichtig aufgebaut sein. Beispielsweise weist die Scheibe 110 auf der der Grundplatte 50 abgewandten Seite eine Auflage auf. Die Auflage kann beispielsweise eine Schicht aus einer kratz- und stoßfesten transparenten Keramik sein. Die Auflage kann insbesondere mittels einer Bindeschicht mit der Scheibe 110 verbunden sein. Als Bindeschicht kommt eine Laminierschicht in Betracht, mit der die Auflage auf die Scheibe 110 auflaminiert ist. Alternativ kann die Scheibe 110 auf der der Grundplatte 50 abgewandten Seite mit einer Beschichtung beschichtet sein, die beispielsweise kratz- und stoßfest ist.

Die Scheibe 110 weist an ihrem in radialer Richtung R liegenden äußeren Umfang 114 einen umlaufenden Kragen 115 auf. Der Kragen 115 hat eine radial umlaufende und in eine die axiale Richtung A ragende Führungsnut 116, die mit einem Führungssteg 121 eines ringförmigen Grundkörpers 120 des Drehfensters 100 in Eingriff steht. Die Führungsnut 116 hat keinen Kontakt zu dem Führungssteg des Grundkörpers.

Die Verbindungsplatte 111 ist im Querschnitt L-förmig ausgebildet. Die kurze Seite des L-förmigen Querschnitts umkragt die Spulen 11 in axialer Richtung A zur Leiterplatte 60, 60' hin. Die Verbindungsplatte 111 ist mit der langen Seite des L-förmigen Querschnitts zwischen dem Tragelement 32 und der Scheibe 110 bzw. zwischen dem Tragelement 32 und der Abdeckkappe 112 angeordnet. Die Verbindungsplatte ist daher in axialer Richtung A sowohl zu der Abdeckkappe 112 als auch zu der Scheibe 110 benachbart. Die Verbindungsplatte 111 liegt in einer radialen Richtung R gesehen innen an einer Anlageausformung 40 des Tragelements 32 an und ist in der radialen Richtung R zwischen dieser Anlageausformung 40 des Tragelements 32 und der Scheibe 110 angeordnet. Dadurch ergibt sich, dass das die Verbindungsplatte 111 im Bereich der Anlage der Scheibe 110 zu der Leiterplatte 60, 60' hin in axialer Richtung A abgestuft ist.

Die Abdeckkappe 112 weist einen Durchmesser auf, der mindestens dem Durchmesser der Rotoreinheit 30 oder der Statoreinheit 10 entspricht. In einem äußeren Bereich des Radiusses der Abdeckkappe 112 ist eine in Umfangsrichtung verlaufende durchgehende Ringnut vorgesehen, in der die ringförmige Dichtung 113 einliegt. Die Abdeckkappe 112 liegt auf der Scheibe 110 auf. Die Abdeckkappe 112 und die Scheibe 110 sind konzentrisch zu der Rotoreinheit 30 und der Statoreinheit 10 angeordnet. Die Scheibe 110 ist zwischen der Abdeckkappe 112 und der Verbindungsplatte bzw. dem Tragelement eingeklemmt.

An einem ringförmigen Grundkörper 120 ist die Grundplatte 50 der Antriebsvorrichtung 1 an dessen Innendurchmesser 122 angeordnet und ragt radial nach Innen in den ringförmigen Grundkörper 120 hineinragt. Für die Grundplatte 50 der Antriebsvorrichtung 1 ist ein an den ringförmigen Grundkörper 120 heranragendes Abdeckgehäuse 130 vorgesehen, wobei die Rotoreinheit 30 der Antriebsvorrichtung 1 das Abdeckgehäuse 130 zumindest teilweise durchragt. Der ringförmige Grundkörper 120 weist eine Durchführung 123 für eine Zuleitung 80 der Antriebsvorrichtung 1 auf.

Ein Abdeckgehäuse 130 ragt in axialer Richtung in den kurzen Abschnitt der L-förmigen Verbindungsplatte 111 hinein. Zwischen der Grundplatte 50 und dem Abdeckgehäuse 130 ist eine Dichtung 131 angeordnet. Das Abdeckgehäuse 130 umschließt die Leiterplatte 60, 60' und die Statoreinheit 10 zumindest teilweise auf der der Grundplatte 50 abgewandten Seite. Zudem kann vorgesehen sein, dass die Leiterplatte 60, 60' und die darauf angeordneten Steuer- und/oder Regelschaltkreise 62 sowie die Elemente der Statoreinheit 10 mit der Vergussmasse 70 vergossen sind.

Die Erfindung ist nicht auf eine der vorbeschriebenen Ausführungsformen beschränkt, sondern in vielfältiger Weise abwandelbar, sofern die Abwandlungen vom Schutzbereich der beigefügten Ansprüche umfasst sind.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein, soweit sie vom Schutzbereich der beigefügten Ansprüche umfasst sind.

### Bezugszeichenliste

- 1: Antriebsvorrichtung

- 10: Statoreinheit
- 11: Spulen
- 12: Spulenkernen
- 13: Spulenkörpern
- 14: Aufnahmeraum
- 15: Stege
- 16: Spulenkernelement
- 17: Ausnehmung

- 30: Rotoreinheit
- 31: Lagereinheit
- 32: Tragelement
- 33: Anlagebereich
- 34: Permanentmagnete
- 35: Lagerbolzen
- 36: Kugellager
- 37: Schaftteil
- 38: Anlageflansch
- 39: Flanschabschnitt
- 40: Anlageausformung

- 50: Grundplatte
- 51: Ausnehmung
- 52: ringförmige Vertiefung
- 53: ringförmige Ausformung
- 54: runder Abschnitt
- 55: rechteckiger Abschnitt
- 56: Außenumfang

- 60: Leiterplatte
- 61: Ausnehmung 62 Steuer- und/oder Regelschaltkreis
- 63: Umriss

- 60': weitere Leiterplatte

- 70: Vergussmasse

- 80: Zuleitung

- 100: Drehfenster

- 110: Scheibe
- 111: Verbindungsplatte
- 112: Abdeckkappe
- 113: ringförmige Dichtung
- 114: Umfang
- 115: Kragen
- 116: Führungsnut

- 120: Grundkörper
- 121: Führungssteg
- 122: Innendurchmesser
- 123: Durchführung

- 130: Abdeckgehäuse
- 131: Dichtung

- A: axiale Richtung
- R: radiale Richtung
- S: Spalt
- RS: Ringspalt

## Patentansprüche

1. Drehfenster (100), aufweisend:
eine Scheibe (110);
eine Antriebsvorrichtung (1) mit einer ringförmigen Statoreinheit (10), einer ringförmigen Rotoreinheit (30) und einer Grundplatte (50),
wobei die Scheibe (110) von der Rotoreinheit (30) gehalten ist;
wobei die Statoreinheit (10) Spulen (11) mit Spulenkernen (12) und Spulenkörpern (13) aufweist und die Rotoreinheit (30) eine Lagereinheit (31) aufweist, wobei die Spulen (11) einen Aufnahmeraum (14) in der Statoreinheit (10) bilden,
wobei, die Spulen (11) mindestens drei Spulen umfassen, die Spulenkerne (12) und die Lagereinheit (31) auf der Grundplatte (50) aufstehen, wobei die Spulenkörper (13) zumindest teilweise auf einer Leiterplatte (60) angeordnet sind, wobei die Leiterplatte (60) auf der Grundplatte (50) aufliegt und eine erste Ausnehmung (61) aufweist, wobei die Spulenkerne (12) im Bereich der ersten Ausnehmung (61) über Stege (15) zusammenhängen und mindestens ein Spulenkernelement (16) bilden,
wobei die Grundplatte (50) eine zweite Ausnehmung (51) aufweist, wobei die Leiterplatte (60) und das Spulenkernelement in der zweiten Ausnehmung einliegen und die zweite Ausnehmung (51) in dem Bereich in dem das Spulenkernelement (16) einliegt eine ringförmige Vertiefung (52) aufweist, die im Wesentlichen einem Außenumfang des Spulenkernelements (16) entspricht,
wobei die Lagereinheit (31) einen Lagerbolzen (35) umfasst und der Lagerbolzen (35) einen Schaftteil (37) und einen Anlageflansch (38) umfasst,
wobei der Anlageflansch (38) in Kontakt mit der Grundplatte (50) steht und zentral in einem runden Abschnitt (54) der Grundplatte (50) aufsteht, und
wobei die ringförmige Vertiefung (52) in dem zentralen Bereich des runden Abschnitts (54) eine ringförmige Ausformung (53) aufweist, die den Anlageflansch (38) um einen Umfang des Anlageflanschs (38) herum einfasst.

2. Drehfenster (100) nach Anspruch 1, **dadurch gekennzeichnet, dass** die Rotoreinheit (30) in einer axialen Richtung (A) konzentrisch zu den Spulen (11) angeordnet ist und mit der Lagereinheit (31) zumindest teilweise in den Aufnahmeraum (14) hineinragt.

3. Drehfenster (100) nach einem der vorhergehenden Ansprüche, **dadurch gekennzeichnet, dass** die Leiterplatte (60) einen Steuer- und/oder Regelschaltkreis (62) aufweist.

4. Drehfenster (100) nach Anspruch 3, **dadurch gekennzeichnet, dass** die Spulenkörper (13) und der Steuer- und/oder Regelschaltkreis (62) im Wesentlichen auf einer Ebene angeordnet sind.

5. Drehfenster (100) nach einem der vorhergehenden Ansprüche, **dadurch gekennzeichnet, dass** die Lagereinheit (31) ein Tragelement (32) aufweist, das einen Anlagebereich (33) aufweist, der sich auf der der Grundplatte (50) gegenüberliegenden Seite der Spulen (11) in radialer Richtung (R) zumindest teilweise über die Spulen (11) hinweg erstreckt, wobei an dem Tragelement (32) mindestens drei Permanentmagnete (34) angeordnet sind, wobei die Permanentmagnete (34) kreisringsegmentförmig sind.

6. Drehfenster (100) nach Anspruch 5, **dadurch gekennzeichnet, dass** zwischen dem Anlagebereich (33) und den Spulen (11) in axialer Richtung (A) ein Spalt (S) ausgebildet ist.

7. Drehfenster (100) nach einem der vorhergehenden Ansprüche, **dadurch gekennzeichnet, dass** die Leiterplatte (60), die Spulen (11) und die Grundplatte (50) mit einer Vergussmasse (70) vergossen sind.

8. Drehfenster (100) nach einem der vorherigen Ansprüche, **dadurch gekennzeichnet, dass** die Scheibe (110) an der Rotoreinheit (30) zwischen einer Verbindungsplatte (111) und einer Abdeckkappe (112) gehalten ist, wobei die Verbindungsplatte (111) und die Abdeckkappe (112) mit der Rotoreinheit (30) verbunden sind.

9. Drehfenster (100) nach einem der vorherigen Ansprüche, **dadurch gekennzeichnet, dass** die Scheibe (110) an ihrem radial äußeren Umfang (114) einen umlaufenden Kragen (115) aufweist.

10. Drehfenster (100) nach Anspruch 9, **dadurch gekennzeichnet, dass** der Kragen (115) eine radial umlaufende und in eine axiale Richtung (A) ragende Führungsnut (116) aufweist, die mit einem Führungssteg (121) eines ringförmigen Grundkörpers (120) des Drehfensters (100) in Eingriff steht, wobei die Führungsnut (116) und der Führungssteg (121) kontaktfrei sind.

11. Drehfenster (100) nach einem der vorhergehenden Ansprüche, **dadurch gekennzeichnet, dass** die Grundplatte (50) der Antriebsvorrichtung (1) an einem Innendurchmesser (122) des ringförmigen Grundkörpers (120) angeordnet ist und radial nach Innen in den ringförmigen Grundkörper (120) hineinragt.

12. Drehfenster (100) nach einem der vorhergehenden Ansprüche, **dadurch gekennzeichnet, dass** für die Grundplatte (50) der Antriebsvorrichtung (1) ein an den ringförmigen Grundkörper (120) heranragendes Abdeckgehäuse (130) vorgesehen ist, wobei die Rotoreinheit (30) der Antriebsvorrichtung (1) das Abdeckgehäuse (130) zumindest teilweise durchragt.

## Claims

1. A rotary window (100), comprising:
a pane (110);
a driving device (1) with an annular stator unit (10), an annular rotor unit (30) and a base plate (50),
wherein the pane (110) is held by the rotor unit (30);
wherein the stator unit (10) comprises coils (11) with coil cores (12) and coil bodies (13) and the rotor unit (30) comprises a bearing unit (31), wherein the coils (11) form a receiving space (14) in the stator unit (10),
wherein the coils (11) comprise at least three coils, the coil cores (12) and the bearing unit (31) stand on the base plate (50), wherein the coil bodies (13) are arranged at least partially on a printed circuit board (60), wherein the printed circuit board (60) rests on the base plate (50) and has a first recess (61), wherein the coil cores (12) are connected in the region of the first recess (61) via webs (15) and form at least one coil core element (16),
wherein the base plate (50) has a second recess (51), wherein the printed circuit board (60) and the coil core element lie in the second recess and the second recess (51) has an annular recess (52) in the region in which the coil core element (16) lies, which annular recess substantially corresponds to an outer circumference of the coil core element (16),
wherein the bearing unit (31) comprises a bearing bolt (35) and the bearing bolt (35) comprises a shaft part (37) and a bearing flange (38),
wherein the bearing flange (38) is in contact with the base plate (50) and stands centrally in a round section (54) of the base plate (50), and
wherein the annular recess (52) has an annular formation (53) in the central region of the round section (54), which annular formation encloses the bearing flange (38) around a circumference of the bearing flange (38).

2. The rotary window (100) according to claim 1, **characterized in that** the rotor unit (30) is arranged concentrically to the coils (11) in an axial direction (A) and protrudes at least partially into the receiving space (14) with the bearing unit (31).

3. The rotary window (100) according to one of the preceding claims, **characterized in that** the printed circuit board (60) has a control and/or regulating circuit (62).

4. The rotary window (100) according to claim 3, **characterized in that** the coil bodies (13) and the control and/or regulating circuit (62) are arranged substantially on one plane.

5. The rotary window (100) according to one of the preceding claims, **characterized in that** the bearing unit (31) has a support element (32) which has a bearing region (33) which extends at least partially over the coils (11) in the radial direction (R) on the side of the coils (11) opposite the base plate (50), wherein at least three permanent magnets (34) are arranged on the support element (32), wherein the permanent magnets (34) are in the shape of a circular ring segment.

6. The rotary window (100) according to claim 5, **characterized in that** a gap (S) is formed between the bearing region (33) and the coils (11) in the axial direction (A).

7. The rotary window (100) according to one of the preceding claims, **characterized in that** the printed circuit board (60), the coils (11) and the base plate (50) are potted with a potting compound (70).

8. The rotary window (100) according to one of the preceding claims, **characterized in that** the pane (110) is held on the rotor unit (30) between a connecting plate (111) and a cover cap (112), wherein the connecting plate (111) and the cover cap (112) are connected to the rotor unit (30).

9. The rotary window (100) according to one of the preceding claims, **characterized in that** the pane (110) has a circumferential collar (115) on its radially outer circumference (114).

10. The rotary window (100) according to claim 9, **characterized in that** the collar (115) has a radially circumferential guide groove (116) which protrudes in an axial direction (A) and is in engagement with a guide web (121) of an annular base body (120) of the rotary window (100), wherein the guide groove (116) and the guide web (121) are contact-free.

11. The rotary window (100) according to one of the preceding claims, **characterized in that** the base plate (50) of the driving device (1) is arranged on an inner diameter (122) of the annular base body (120) and protrudes radially inwards into the annular base body (120).

12. The rotary window (100) according to one of the preceding claims, **characterized in that** a cover housing (130) protruding towards the annular base body (120) is provided for the base plate (50) of the driving device (1), wherein the rotor unit (30) of the driving device (1) protrudes at least partially through the cover housing (130).

## Revendications

1. Fenêtre tournante (100), comprenant :
un disque (110) ;
un dispositif d'entraînement (1) comprenant une unité de stator annulaire (10), une unité de rotor annulaire (30) et une plaque de base (50),
le disque (110) étant maintenu par l'unité de rotor (30) ;
l'unité de stator (10) comprenant des bobines (11) avec des noyaux de bobine (12) et des corps de bobine (13) et l'unité de rotor (30) comprenant une unité de palier (31), les bobines (11) formant un espace de réception (14) dans l'unité de stator (10),
dans laquelle les bobines (11) comprennent au moins trois bobines, les noyaux de bobine (12) et l'unité de palier (31) reposent sur la plaque de base (50), les corps de bobine (13) étant disposés au moins partiellement sur une carte de circuit imprimé (60), la carte de circuit imprimé (60) reposant sur la plaque de base (50) et comprenant un premier évidement (61), les noyaux de bobine (12) étant reliés par des nervures (15) dans la zone du premier évidement (61) et formant au moins un élément de noyau de bobine (16),
la plaque de base (50) comprenant un deuxième évidement (51), la carte de circuit imprimé (60) et l'élément de noyau de bobine étant logés dans le deuxième évidement et le deuxième évidement (51) comprenant, dans la zone dans laquelle l'élément de noyau de bobine (16) est logé, un évidement annulaire (52) qui correspond sensiblement à une circonférence extérieure de l'élément de noyau de bobine (16),
l'unité de palier (31) comprenant un boulon de palier (35) et le boulon de palier (35) comprenant une partie de tige (37) et une bride d'appui (38),
la bride d'appui (38) étant en contact avec la plaque de base (50) et reposant au centre dans une section ronde (54) de la plaque de base (50), et
l'évidement annulaire (52) comprenant, dans la zone centrale de la section ronde (54), une formation annulaire (53) qui entoure la bride d'appui (38) autour d'une circonférence de la bride d'appui (38).

2. Fenêtre tournante (100) selon la revendication 1, **caractérisée en ce que** l'unité de rotor (30) est disposée concentriquement aux bobines (11) dans une direction axiale (A) et pénètre au moins partiellement dans l'espace de réception (14) avec l'unité de palier (31).

3. Fenêtre tournante (100) selon l'une des revendications précédentes, **caractérisée en ce que** la carte de circuit imprimé (60) comprend un circuit de commande et/ou de régulation (62).

4. Fenêtre tournante (100) selon la revendication 3, **caractérisée en ce que** les corps de bobine (13) et le circuit de commande et/ou de régulation (62) sont disposés sensiblement sur un plan.

5. Fenêtre tournante (100) selon l'une des revendications précédentes, **caractérisée en ce que** l'unité de palier (31) comprend un élément de support (32) qui comprend une zone d'appui (33) qui s'étend sur le côté des bobines (11) opposé à la plaque de base (50) dans la direction radiale (R) en recouvrant au moins partiellement les bobines (11), au moins trois aimants permanents (34) étant disposés sur l'élément de support (32), les aimants permanents (34) étant en forme de segment d'anneau circulaire.

6. Fenêtre tournante (100) selon la revendication 5, **caractérisée en ce qu'**un espace (S) est formé entre la zone d'appui (33) et les bobines (11) dans la direction axiale (A).

7. Fenêtre tournante (100) selon l'une des revendications précédentes, **caractérisée en ce que** la carte de circuit imprimé (60), les bobines (11) et la plaque de base (50) sont scellées avec une masse de scellement (70).

8. Fenêtre tournante (100) selon l'une des revendications précédentes, **caractérisée en ce que** le disque (110) est maintenu sur l'unité de rotor (30) entre une plaque de liaison (111) et un capuchon de recouvrement (112), la plaque de liaison (111) et le capuchon de recouvrement (112) étant reliés à l'unité de rotor (30).

9. Fenêtre tournante (100) selon l'une des revendications précédentes, **caractérisée en ce que** le disque (110) comprend, sur sa circonférence radialement extérieure (114), un collier circonférentiel (115).

10. Fenêtre tournante (100) selon la revendication 9, **caractérisée en ce que** le collier (115) comprend une rainure de guidage (116) radialement circonférentielle et faisant saillie dans une direction axiale (A), qui est en prise avec une nervure de guidage (121) d'un corps de base annulaire (120) de la fenêtre tournante (100), la rainure de guidage (116) et la nervure de guidage (121) étant sans contact.

11. Fenêtre tournante (100) selon l'une des revendications précédentes, **caractérisée en ce que** la plaque de base (50) du dispositif d'entraînement (1) est disposée sur un diamètre intérieur (122) du corps de base annulaire (120) et pénètre radialement vers l'intérieur dans le corps de base annulaire (120).

12. Fenêtre tournante (100) selon l'une des revendications précédentes, **caractérisée en ce qu'**un boîtier de recouvrement (130) s'étendant jusqu'au corps de base annulaire (120) est prévu pour la plaque de base (50) du dispositif d'entraînement (1), l'unité de rotor (30) du dispositif d'entraînement (1) traversant au moins partiellement le boîtier de recouvrement (130).
